# EUROPÄISCHE PATENTSCHRIFT

(11) **EP 1 080 321 B1**
(45) Veröffentlichungstag und Bekanntmachung des Hinweises auf die Patenterteilung: **09.11.2005**
(21) Anmeldenummer: 00916850.1
(22) Anmeldetag: 18.02.2000
(51) Int. Cl.: F16H 47/08

(54) **HYDRODYNAMISCH, MECHANISCHES MEHRGANGVERBUNDGETRIEBE**
HYDRODYNAMIC, MECHANICAL MULTI-SPEED COMPOUND TRANSMISSION
TRANSMISSION BIMODALE A PLUSIEURS VITESSES HYDRODYNAMIQUE ET MECANIQUE

(30) Priorität: 19.02.1999 DE 19907037
(43) Veröffentlichungstag der Anmeldung: 07.03.2001
(73) Patentinhaber: Voith Turbo GmbH & Co. KG, 89522 Heidenheim (DE)
(72) Erfinder: MEIER-BURKAMP, Gerhard, D-89522 Heidenheim (DE); HERTRICH, Franz, D-89520 Heidenheim (DE)
(74) Vertreter: Dr. Weitzel & Partner
(86) Internationale Anmeldenummer: PCT/EP2000/001371
(87) Internationale Veröffentlichungsnummer: WO 2000/049312

(56) Entgegenhaltungen:
- DE-A- 3 604 393
- DE-B- 1 605 988
- GB-A- 2 292 428
- PATENT ABSTRACTS OF JAPAN vol. 1997, no. 07, 31. Juli 1997 (1997-07-31) & JP 09 079346 A (EXEDY CORP), 25. März 1997 (1997-03-25) in der Anmeldung erwähnt

## Beschreibung

Die Erfindung betrifft ein hydrodynamisch-mechanisches Mehrgangverbundgetriebe, im einzelnen mit den Merkmalen aus dem Oberbegriff des Anspruchs 1.

Hydrodynamisch-mechanische Mehrgangverbundgetriebe, umfassend einen hydrodynamischen Drehzahl-/Drehmomentenwandler und einen mechanischen Getriebeteil, sind in einer Vielzahl von Ausführungen bekannt. Die Druckschrift DE 36 04 393 C2 offenbart, beispielhaft ein hydrodynamisches Mehrgangverbundgetriebe, umfassend einen Drehmomentenwandler und ein mit diesem in Serie geschaltetes Schaltgetriebe. Das Schaltgetriebe umfaßt dazu zwei Pianetenradsätze, wobei die Planetenträger der beiden Planetenradsätze miteinander gekoppelt sind und den Ausgang des Schaltgetriebes bilden. Die Anzahl der erforderlichen Planetenradstege bzw. Planetenradsätze (u. U. ein Ravigneauxsatz) kann mit einer derartigen Anordnung gering gehalten werden und bei entsprechender Zuordnung von Schalteinrichtungen sind zumindest drei Gangstufen realisierbar, die in axialer Richtung gesehen, sehr kurz gehalten werden. Der hydrodynamische Drehzahl-/Drehmomentenwandler umfaßt ein Pumpenrad, ein Turbinenrad sowie zwei Leiträder - ein erstes Leitrad und ein zweites Leitrad, wobei Mittel vorgesehen sind, weiche eine Kopplung des Turbinenrades sowie des ersten Leitrades mit dem mechanischen Getriebeteil in Form des Schaltgetriebes ermöglichen. Im einzelnen ist die Gesamtgetriebeeingangswelle entweder über den hydrodynamischen Drehzahl-/Drehmomentenwandler und dabei über das Turbinenrad mit dem Sonnenrad des einen Planetenradsatzes des mechanischen Getriebeteiles oder aber direkt über eine sogenannte Überbrückungskupplung mit diesem koppelbar. Das erste Leitrad ist über einen Freilauf mit dem Sonnenrad des anderen zweiten Planetenradsatzes des mechanischen Getriebeteiles verbunden. Die charakteristischen Eigenschaften des Drehzahl-/Drehmomentenwandiers in jedem Bereich des Übersetzungsverhältnisses und das Übersetzungsverhältnis des mechanischen Getriebeteils werden durch Umschalten des Übertragungsweges des von der ersten Leitradwelle ausgehenden Momentes geändert, und zwar durch die wahlweise Betätigung von Kupplungs- und/oder Bremseinrichtungen, die entweder ein Festsetzen der ersten Leitradwelle oder aber eine Kopplung der ersten Leitradwelle mit der Turbinenradwelle und damit des ersten Sonnenrades des ersten Planetenradsatzes ermöglichen.

Der Nachteil des in der obengenannten Druckschrift beschriebenen Getriebes besteht in einem relativ hohen konstruktiven Aufwand, der sich in höheren Kosten niederschlägt, bedingt u. a. durch die Verwendung eines einstufigen, dreiphasigen Wandlers und die Bereitstellung der Abstützungsmöglichkeiten seiner beiden Leiträder. Bezüglich des Wirkungsgrades im Anfahrbereich und der möglichen Anfahrwandlung werden bereits in diesem Getriebe gute Ergebnisse erzielt, welche jedoch für einige Einsatzfälle einer Verbesserung bedürfen.

Eine Ausführung eines hydrodynamisch-mechanischen Mehrgangverbundgetriebes zur Realisierung von fünf Gangstufen ist der Druckschrift JP 09079346 A entnehmbar. Diese umfaßt einen hydrodynamischen Getriebeteil in Form eines hydrodynamischen Drehzahl-/Drehmomentenwandlers mit einem Pumpenrad, einem Turbinenrad und einem dazwischen angeordneten Leitrad, und ein mit diesem in Serie geschaltetes Schaltgetriebe. Das Schaltgetriebe umfaßt ebenfalls zwei Planetenradsätze, wobei die Planetenträger der beiden Planetenradsätze miteinander gekoppelt sind und den Ausgang des Schaltgetriebes bilden. Das Leitrad stützt sich über einen Freilauf auf den Planetenradsätzen ab. Zur Realisierung des vierten und füften Ganges ist zwischen Turbinenrad und den beiden Planetenradsätzen des mechanischen Schaltgetriebes desweiteren eine Drehzahl-/Drehmomentenwandlungseinrichtung in Form eines Planetenradsatzes angeordnet, welche jeweils in den Wandlergängen das Turbinenmoment mit einer Übersetzung auf die beiden Planetenradsätze überträgt. Beim Einsatz in Fahrzeugen wird dabei die Leistungsübertragung über den hydrodynamischen Drehzahl-/Drehmomentwandler lediglich während des Anfahrvorganges und zum Teil im ersten unteren Getriebegang genutzt. Im übrigen Bereich des Betriebsbereiches erfolgt die Leistungsübertragung dann unter Umgehung des hydrodynamischen Drehzahl-/Drehmomentwandlers, was in der Regel mittels einer Überbrückungskupplung realisiert wird. Wesentlich für die Verwendung eines hydrodynamischen Drehzahl-/Drehmomentwandlers für den Anfahrvorgang sind dabei die nachfolgend genannten Vorteile hydrodynamischer Leistungsübertragung: stufenlos, drehmomentwandeind, elastisch, verschleißfrei sowie schwingungsdämpfend. Im Zusammenwirken mit Antriebsmaschinen für unterschiedliche Einsatzzwecke werden dabei an das Übertragungsverhalten auch während des Anfahrvorganges konkrete Anforderungen gestellt. Insbesondere für den Einsatz in Fahrzeugen ist während des Anfahrvorganges ein bestimmtes Verhalten, insbesondere eine bestimmte Leistungsaufnahme durch das Pumpenrad des hydrodynamischen Drehzahl-/Drehmomentwandlers gewünscht. Aufgrund der Kopplung zwischen dem Leitrad des hydrodynamischen Drehzahl-/Drehmomentenwandlers und den über ihre Stege miteinander gekoppelten Planetenradsätzen wird das Leitrad in bestimmten Betriebszuständen mit entgegengesetztem Drehsinn zwischen Pumpenrad und Turbinenrad angetrieben. Diese Lösung bietet zwar den Vorteil einer Mehrgängigkeit bei geringer Baugröße und gleichzeitig eines verbesserten Übertragungsverhaltens im Anfahrbereich, insbesondere einer Erhöhung der Wandlung in diesem Bereich und einem verbesserten Wirkungsgrad, allerdings reicht dies in der Regel nicht aus, um den Erfordernissen an den Einsatzfall gerecht zu werden. Auch ist die Anbindung des zusätzlichen Planetenradsatzes konstruktiv sehr aufwendig und muß bei der Auslegung des Getriebes mit berücksichtigt werden. Insbesondere bei Verwendung standardisierter Drehzahl-/Drehmomentenwandlungseinheiten kann die zusätzliche Anordnung bzw. Anbindung des Planetenradsatzes Probleme bereiten.

Eine gattungsgemäße Ausführung eines hydrodynamisch-mechanischen Mehrgangverbundgetriebes ist aus der Druckschrift DE 1 605 988 bekannt. Dieses umfasst einen Drehmomentwandler und ein mit diesem in Serie geschaltetes Schaltgetriebe, wobei der Drehmomentwandler einstufig und zweiphasig ausgeführt ist. Bei diesem ist die Getriebeeingangswelle mit dem Pumpenrad des hydrodynamischen Drehzahl-/Drehmomentwandlers und dem mechanischen Getriebeteil koppelbar. Femer ist das Turbinenrad mit dem mechanischen Getriebeteil verbunden. Bei dieser Ausführung besteht die Möglichkeit, das Leitrad, welches über einen Freilauf mit dem mechanischen Getriebeteil verbunden ist, mit dem Pumpenrad drehfest zu koppeln. Dadurch wird in den höheren Gängen die Wirkungsweise des hydrodynamischen Drehzahl-/Drehmomentwandlers als hydrodynamische Kupplung erzielt, welche dazu führt, daß die Leistung über die schlupfbehaftete hydrodynamische Kupplung zum mechanischen Getriebeteil übertragen wird, während in den niederen Gängen die Leistungsübertragung über den Wandler stattfindet. Dies hat jedoch den Nachteil, daß derartige Getriebe nur für eine geringe Anzahl von Gangstufen optimal arbeiten und femer mit diesen nur ein geringer Geschwindigkeitsbereich mit vertretbarem Wirkungsgrad überschritten werden kann.

Der Erfindung liegt daher die Aufgabe zugrunde, ein Getriebe der eingangs genannten Art derart weiterzuentwickeln, daß dieses noch optimaler die bestehenden Einsatzerfordemisse, insbesondere im Anfahrbereich, zu erfüllen vermag, wobei die Vorteile des geringen Gewichtes und der geringen Baugröße weiter beibehalten werden sollen. Das Getriebe soll insbesondere für den Einsatz in Antriebssträngen von Fahrzeugen oder anderen Anwendungsbereichen geeignet sein, wobei neben den Vorteilen der hydrodynamischen Leistungsübertragung auch ein wesentlich entlasteterer Hochlauf der Antriebsmaschine gewährleistet werden soll. Des weiteren ist auf eine Verringerung des konstruktiven Aufwandes und der Kosten des Getriebes abzustellen. Das Gretriebe soll ferner für einen großen Bechrielsbereich, insbesondere zum Überschreiten eines großen Geschwindigfeeitsbereiches, einsetzbas sein und sich über diesen durch ein optimales Übertrangungskupplung.

Die erfindungsgemäße Lösung ist durch die Merkmale des Anspruchs 1 charakterisiert. Vorteilhafte Ausgestaltungen sind in den Unteransprüchen beschrieben.

Das hydrodynamisch-mechanische Mehrgangverbundgetriebe umfaßt einen ersten hydrodynamischen Getriebeteil und einen weiteren zweiten mechanischen Getriebeteil. Der mechanische Getriebeteil weist wenigstens zwei Planetenradsätze zur Realisierung von wenigstens drei Gangstufen - einen ersten Planetenradsatz und einen zweiten Planetenradsatz - auf, die derart aufgebaut und ausgelegt sind, daß jeweils ein Element des ersten Planetenradsatzes und des zweiten Planetenradsatzes wenigstens mittelbar mit der Getriebeeingangswelle oder einem Element des hydrodynamischen Drehzahl-/Drehmomentenwandlers koppelbar ist und jeweils ein weiteres zweites Element des ersten Planetenradsatzes mit einem weiteren zweiten Element des zweiten Planetenradsatzes drehfest gekoppelt ist und diese Kopplung den Ausgang des mechanischen Drehzahl-/Drehmomentenwandlers bildet, welcher wenigstens mittelbar mit dem Abtrieb des Getriebes gekoppelt ist. Erfindungsgemäß ist der hydrodynamische Drehzahl-/Drehmomentenwandler des ersten hydrodynamischen Getriebeteils als einstufiger zweiphasiger hydrodynamischer Drehzahl-/Drehmomentenwandler ausgeführt. Dieser umfaßt ein Pumpenrad, ein Turbinenrad und ein Leitrad. Mit dieser Ausführung wird lediglich eine Turbinenstufe realisiert und das Reaktionsglied in Form des Leitrades läuft dauernd oder zeitweise um. Dies wird erfindungsgemäß dadurch gelöst, daß sich das Leitrad über ein Übersetzungsglied mit festem Abstützpunkt oder einen Freilauf mit dem ersten Planetenradsatz in Verbindung steht. Erfindungsgemäß ist desweiteren das Turbinenrad des hydrodynamischen Drehzahl-/Drehmomentwandlers ist mit dem zweiten Planetenradsatz direkt drehfest verbunden, d.h. die Kopplung ist frei von zwischengeschalteten bzw. zwischenshaltbaren Drehzahl-/Drehmomentenwandlungseinrichtngen. Auch bei dieser Ausführung wird in einem Antriebsstrang, insbesondere für den Einsatz in Fahrzeugen zur Verringerung des Energieverbrauches einer Antriebsmaschine während des Anfahrvorganges in einem Antriebsstrang über wenigstens einen Teilbereich des Anfahrvorganges die mittels des Pumpenrades aufnehmbare Leistung durch Dralländerung der Strömung beim Übertritt vom Leitrad zum Pumpenrad gesenkt. Die Dralländerung wird dabei vorzugsweise durch den Antrieb des Leitrades mit entgegengesetztem Drehsinn zum Drehsinn des Pumpenrades und des Turbinenrades erzeugt. Die dadurch erzielte Erhöhung der Wandlung und Verbesserung des Wirkungsgrades ist jedoch aufgrund der Freiheit von zwischengeschalteten Übersetzungsstufen zwischen Turbinenrad und zweitem Planetenradsatz und damit des theoretisch größeren Drehzahlverhältnisses zwischen Leitrad und Turbinenrad größer, als bei der konventionellen Getriebeausführung gemäß der JP 09079346 A.

Die erfindungsgemäße Lösung bietet den Vorteil des Einsatzes eines kostengünstigeren Wandlers und damit der Reduzierung der Gesamtkosten für das hydrodynamisch-mechanische Verbundgetriebe. Da das Leitrad des Wandlers das Drehmoment nicht an der gehäusefesten Welle abstützt, sondern auf den ersten Planetenradsatz des mechanischen Getriebeteils wirkt, wird das Abtriebsmoment des hydrodynamischen Drehzahl-/Drehmomentenwandiers erhöht. Dabei nimmt mit größer werdender Turbinendrehzahl des hydrodynamischen Wandlers auch die Drehzahl des Leitrades in entgegengesetzter Richtung zu. Dies führt im Ergebnis zu einer Erhöhung der Anfahrwandlung und einer Verbesserung des Wirkungsgrades im Anfahrbereich. Das dabei vom Pumpenrad aufnehmbare Moment, welches sich dabei wie bei stationären und inkompressiblen Strömung mit Hilfe der Stromfadentheorie nach dem lmpulsmomentensatz der Strömungsmechanik aus der Beziehung
M_{P} = M x Δ (rcᵤ) errechnet werden kann, wird abgesenkt. Die Größe dieses Momentes ist dabei abhängig von dem je Zeiteinheit durch das Pumpenrad fließenden Massenstrom M = ζ x V, wobei mit ζ die Dichte der Betriebsflüssigkeit und mit V der Volumenstrom bezeichnet wird, und der Differenz der Produkte aus dem Radius r und der Umfangskomponente cᵤ der absoluten Strömungsgeschwindigkeit am Aus- und Eintritt des betrachteten Rades. Eine Änderung der Zu- und Abströmrichtung am betrachteten Rad bedingen demnach auch Änderungen des an diesem Rad wirkenden Momentes. Aufgrund der Beziehung, daß die Summe aller Momente in einem abgeschlossenen System immer gleich Null sein muß, stellen sich die Betriebszustände von selbst ein, so daß diese Gleichgewichtsbedingungen immer wieder erfüllt sind. Als wesentliche Kenngrößen einer hydrodynamischen Energieübertragungseinrichtung, das heißt des hydrodynamischen Drehzahl-/Drehmomentwandlers werden dabei die nachfolgend genannten angesehen:
- Eingangs- oder Pumpenmoment M_{P}
- Ausgangs- oder Turbinenmoment M_{T}
- Eingangs- oder Pumpendrehzahl n_{P}
- Ausgangs- oder Turbinendrehzahl n_{T}
- Wirkungsgrad η

Die Aufnahmeleistung der Pumpe bestimmt sich dabei aus dem Produkt des aufgenommenen Pumpenmomentes M_{P} und der Umlaufbeschleunigung ω. Durch den entgegengesetzten Antrieb des Leitrades zum Drehsinn zwischen Pumpen- und Turbinenrad erfährt die Strömung beim Übertritt vom Leitrad zum Pumpenrad eine Dralländerung, welche als Ursache für die Änderung des Leistungsaufnahmeverhaltens des Pumpenrades steht. Des weiteren wird die Anfahrwandlung mit dieser Lösung wie bei anderen Wandlerausführungen erhöht, wobei jedoch entscheidend ist, daß das Abtriebsmoment am Turbinenrad gegenüber konventionellen Lösungen unverändert bleibt, wobei dieser Effekt durch das gleichzeitige Vorliegen der Verringerung des vom Pumpenrad aufgenommenen Momentes und einer höheren Anfahrwandlung erzielt wird. Dies ermöglicht es, das unter Bereitstellung des gleichen Abtriebsmomentes die Antriebsmaschine erheblich entlastet wird, wobei jedoch trotzdem ein entsprechend hohes Anfahrmoment gewünscht ist. Betrachtet man die dimenionslose Leistungskennzahl λ für einen hydrodynamischen Drehzahl-Drehzahlwandler mit erfindungsgemäß in entgegengesetzter Richtung angetriebenem Leitrad verändert sich mit der Turbinendrehzahl auch die Belastung der Antriebsmaschine und damit je nach deren Charakteristik zu einer anderen Antriebsdrehzahl hin beziehungsweise zu einem anderem Antriebsmoment.

Da für einen bestimmten Betriebszustand des Strömungsgetriebes, das heißt einen vorgegebenen Wert von Ausgangs- zur Eingangsdrehzahl die Abhängigkeit der Drehmomentaufnahme durch eine quadratische und diejenige der Leistungsaufnahme durch eine kubische Parabel in einem Diagramm darstellen lassen, ergeben sich für die Drehmomentbeziehungsweise Leistungsaufnahme des hydrodynamischen Drehzahl-/Drehmomentwandlers bei unterschiedlichen Werten von Ausgangs- zu Eingangsdrehzahlen im Diagramm Parabeln mit unterschiedlichem Anstieg.

Dieses Diagramm wird dann in die Kennlinie der Antriebsmaschine eingetragen, so daß über die einzelnen Schnittpunkte der Kennlinie der Antriebsmaschine, insbesondere bei Einsatz einer Verbrennungskraftmaschine als Antriebsmaschine die Schnittpunkte der Motorkennlinie mit den Kennlinien des hydrodynamischen Drehzahl-/Drehmomentwandlers den jeweiligen Betriebszustand von Antriebsmaschine und Drehzahl-/Drehmomentwandler bei Zusammenarbeit darstellen. Während bei einem konventionellen hydrodynamischen Drehzahl-/Drehmomentwandler mit Zunahme der Pumpendrehzahl eine Verringerung des aufnehmbaren Momentes ergeht, wird mit der erfindungsgemäßen Lösung ein gänzlich anderes Kennlinienverhalten ermittelt, wobei hier bis zu einem bestimmten Verhältnis der Pumpendrehzahl zur Turbinendrehzahl das aufnehmbare Moment am Pumpenrad verringert wird und ab diesem bestimmten Verhältnis der An- zur Abtriebsdrehzahl dieses Phänomen wieder umschlägt und dem einer konventionellen Lösung entspricht.

Vorzugsweise wird die Kopplung der beiden Planetenradsätze - erster Planetenradsatz und zweiter Planetenradsatz - hinsichtlich eines ihrer Getriebeelemente derart realisiert, daß Getriebeelemente des gleichen Typs miteinander gekoppelt werden. Dabei wird das Getriebeelement des ersten Planetenradsatzes, welches mit einem Getriebeelement des zweiten Planetenradsatzes drehfest verbunden ist, jeweils vom Planetenträger des dazugehörigen Planetenradsatzes gebildet. Die beiden Sonnenräder der einzelnen Planetenradsätze, des ersten Planetenradsatzes und des zweiten Planetenradsatzes, bilden die Eingänge des mechanischen Drehzahl-/Drehmomentenwandiers. Dabei ist der erste Eingang, welcher mit dem Sonnenrad des ersten Planetenradsatzes gekoppelt ist, über einen Freilauf mit dem Leitrad des hydrodynamischen Drehzahl-/Drehmomentenwandlers verbunden. Das Sonnenrad des zweiten Planetenradsatzes ist vorzugsweise mit der Turbinenradwelle verbunden, welche entweder über den hydrodynamischen Drehzahl-/Drehmomentenwandler oder die Überbrückungskupplung mit der Getriebeeingangswelle. koppelbar ist. Der Ausgang des mechanischen Drehzahl-/Drehmomentenwandlers kann entweder direkt mit dem Abtrieb des Getriebes oder einer weiteren mechanischen Drehzahl-/Drehmomentenwandlungseinrichtung in Form einer mechanischen Nachschaltstufe, welche wiederum mit dem Abtrieb bzw. der Getriebeausgangswelle verbunden ist, gekoppelt sein.

Zur Realisierung der einzelnen Gangstufen sind Schalteinrichtungen in Form von Bremseinrichtungen und Kupplungseinrichtungen vorgesehen, wobei diese vorzugsweise in Lamellenbauart ausgeführt werden. Die einzelnen Schalteinrichtungen sind entsprechend dem gewünschten Gang und der dabei erhältlichen Übersetzung zu betätigen. Dazu ist vorzugsweise eine Getriebesteuerung vorgesehen.

Eine erste Bremseinrichtung dient dabei der Feststellung der Leitradwelle und damit des Sonnenrades des ersten Planetenradsatzes. Eine zweite Bremseinrichtung dient der Feststellung des Hohlrades des ersten Planetenradsatzes und eine dritte Bremseinrichtung der Feststellung des Hohlrades des zweiten Planetenradsatzes des mechanischen Drehzahl-/Drehmomentenwandlers. Eine weitere vierte Bremseinrichtung dient der Feststellung des Sonnenrades der Nachschaltstufe. Ein erstes Kupplungselement dient der Realisierung der drehfesten Verbindung des Sonnenrades des ersten Planetenradsatzes und des Sonnenrades des zweiten Planetenradsatzes.

Bei Anordnung der Nachschaltstufe in Kraftflußrichtung von der Getriebeeingangswelle zur Getriebeausgangswelle räumlich betrachtet hinter dem mechanischen Drehzahl-/Drehmomentenwandler besteht die Möglichkeit, auf einfache Art und Weise Nebenabtriebe zu realisieren. Die bloße Anordnung der mechanischen Nachschaltstufe hinter dem mechanischen Drehzahl-/Drehmomentenwandler bildet eine erste Grundkonfiguration, welche sich durch die Realisierung eines Mehrganggetriebes, insbesondere Sechsganggetriebes bei gleichzeitiger Bauraumverkürzung, insbesondere bei gleichbleibendem Bauraumbedarf gegenüber dem Grundgetriebe (3-Ganggetriebe) auszeichnet. Die Nachschaltstufe ist vorzugsweise ebenfalls in Form eines einfachen Planetenradgetriebes aufgebaut, wobei jedoch lediglich ein Schaltelement in Form der vierten Bremseinrichtung vorzusehen ist, welche der Feststellung des Sonnenrades dient. Ansonsten ist der Steg der mechanischen Nachschaltstufe mit dem Steg des mechanischen Drehzahl-/Drehmomentenwandlers gekoppelt. Dadurch ist es möglich, drei der Gangstufen ohne Betätigung eines Schaltelementes an der Nachschaltstufe zu realisieren, da der Steg der Nachschaltstufe mit der gleichen Drehzahl wie der Ausgang der mechanischen Drehzahl-/Drehmomentenwandlungseinrichtung dreht. Der Ausgang des Nachschaltsatzes wird vom Hohlrad gebildet. Dieses steht mit weiteren drehzahl-/drehmomentenübertragenden Elementen in Triebverbindung, beispielsweise mit einem Stirnrad oder, je nach Ausgestaltung der Verzahnung des Hohlrades, auch einem Kegelrad. Bei Auslegung des Getriebes sind die dadurch sich ergebenden Übersetzungen mit einzubeziehen.

Die erfindungsgemäße Lösung wird nachfolgend anhand von Figuren erläutert. Darin ist im einzelnen folgendes dargestellt:
- Fig. 1: verdeutlicht in schematisch vereinfachter Darstellung ein erfindungsgemäß gestaltetes Getriebe;
- Fig. 2: verdeutlicht anhand eines Schaltschemas eine mögliche Funktionsweise des in der Fig. 1 dargestellten Getriebes;
- Fig. 3: verdeutlicht einander gegenübergestellt Wandlerkennlinien für das erfindungsgemäß gestaltete Getriebe und das gattungsgemäße Getriebe;
- Fig. 4: verdeutlicht einen Ausschnitt aus einer erfindungsgemäß gestalteten Getriebebaueinheit gemäß Figur 1 mit zusätzlicher Anbindungsmöglichkeit des leitrades am Gehäuse.

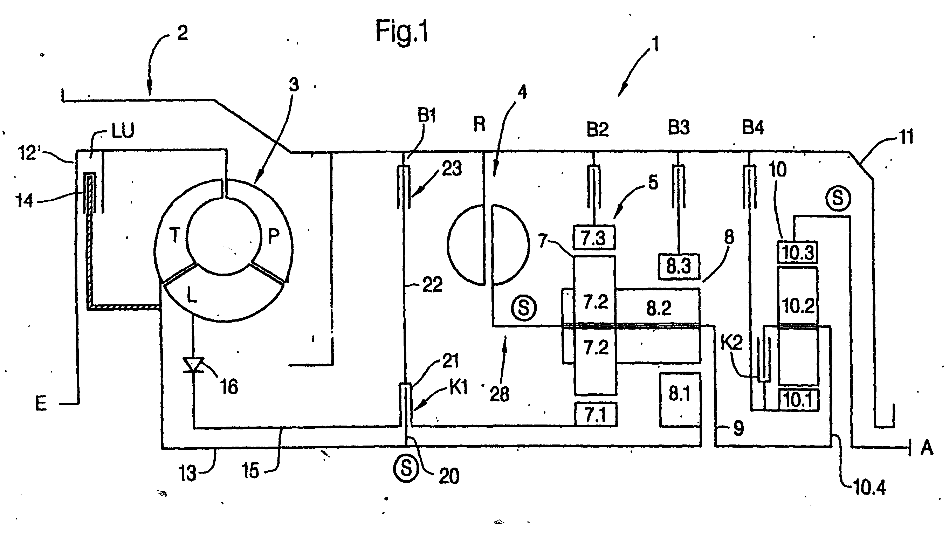

Die Figur 1 verdeutlicht in schematisch vereinfachter Darstellung die Ausgestaltung eines erfindungsgemäß gestalteten Getriebes im Axialschnitt. Die Getriebeeinheit ist als hydrodynamisch-mechanisches Verbundgetriebe 1 ausgeführt.

Das hydrodynamisch-mechanische Verbundgetriebe 1 umfaßt einen ersten hydrodynamischen Getriebeteil 2 in Form eines hydrodynamischen Drehzahl-/Drehmomentenwandlers 3 und einen zweiten mechanischen Getriebeteil 4. Der mechanische Getriebeteil 4 umfaßt einen mechanischen Drehzahl-/Drehmomentenwandler 5 und einen, diesem in Kraftflußrichtung im Traktionsbetrieb nachgeschalteten Gruppensatz. Der mechanische Drehzahl-/Drehmomentenwandler 5 ist als abgewandelter Ravigneaux-Planetenradsatz ausgeführt. Dieser umfaßt einen ersten Planetenradsatz 7 und einen zweiten Planetenradsatz 8, welche einen gemeinsam genutzten Planetenradträger 9 aufweisen. Dieser stellt die Kopplung zwischen einem Getriebeelement des ersten und des zweiten Planetenradsatzes dar. Der erste Planetenradsatz 7 umfaßt ein Sonnenrad 7.1, Planetenräder 7.2 und ein Hohlrad 7.3. Der zweite Planetenradsatz 8 umfaßt ein Sonnenrad 8.1, Planetenräder 8.2 und ein Hohlrad 8.3.

Der Gruppensatz 6 umfaßt wenigstens einen Planetenradsatz 10, welcher ein Sonnenrad 10.1, Planetenräder 10.2, ein Hohlrad 10.3 und einen Steg 10.4 aufweist. Der hydrodynamische Drehzahl-/Drehmomentenwandler 3 ist erfindungsgemäß einstufig und zweiphasig ausgeführt. Dies bedeutet, daß mit diesem nur in einer Turbinenstufe gearbeitet werden kann. Der hydrodynamische Drehzahl-/Drehmomentenwandler 3 umfaßt ein Turbinenrad T, ein Pumpenrad P und ein Leitrad L.

Das Pumpenrad P ist mit einer Getriebeeingangswelle E, welche wenigstens mittelbar mit einer, dem Antrieb dienenden Antriebsmaschine koppelbar ist, vorzugsweise mit einem Schwungrad 12 einer Verbrennungskraftmaschine derart verbunden, daß die Kraft vom Schwungrad 12 auf das Pumpenrad P übertragen wird. Das Turbinenrad T ist mit einer Turbinenradwelle 13 drehfest verbunden. Um die Vorteile der hydrodynamischen Drehmomentenübertragung mit Überbrückungskupplung zu nutzen, welche im folgenden wären:
- selbsttätige stufenlose Einstellung des Verhältnisses zwischen der An-und Abtriebsdrehzahl entsprechend der Belastung auf der Abtriebsseite
- Zurverfügungstehen des maximalen Drehmomentes für einen Anfahrvorgang mit hoher Beschleunigung;
- Möglichkeit der Wärmeabfuhr durch Fremd- oder Oberflächenkühlung
- Trennung des hydrodynamischen Drehzahl-/Drehmomentenwandlers vom Abtrieb, insbesondere vom Fahrzeug bei kleinen Antriebsdrehzahlen und Übertragung eines geringen Restmomentes, so daß ein Abwürgen der Antriebsmaschine von der Abtriebsseite her nicht möglich ist
- verschleißfreie Leistungsübertragung
und gleichzeitig die Nachteile einer hydrodynamischen Leistungsübertragung, welche im wesentlichen in einem oftmals nicht ausreichend erzielbaren Wirkungsgrad besteht, um mit einem hydrodynamischen Getriebe allein arbeiten zu können, da Verlustleistungsanteile, die sich aus Reibungs- und Stoßverlusten zusammensetzen, die übertragbare Gesamtleistung vermindern und die erzielten Wandlungsbereiche für den Fahrzeugeinsatz oft nicht ausreichend sind, wird der hydrodynamische Drehzahl-/Drehmomentenwandler 3 nur in den unteren Gangstufen, vorzugsweise nur während des Anfahrvorganges, zur Leistungsübertragung genutzt. Zur Verbesserung des Übertragungswirkungsgrades wird daher der hydrodynamische Drehzahl-/Drehmomentenwandler 3 aus der Leistungsübertragung herausgenommen, vorzugsweise durch Überbrückung. Zu diesem Zweck ist zwischen dem Turbinenrad T und dem Schwungrad 12 bzw. der Getriebeeingangswelle eine Überbrückungskupplung 14 angeordnet.

Das Leitrad L ist zwischen dem Turbinenrad T und dem Pumpenrad P angeordnet und durch einen Freilauf gelagert. Das Leitrad L ist mit einer Leitradwelle 15 drehfest verbindbar, wobei zwischen dem Leitrad L und der Leitradwelle 15 ein Freilauf 16 vorgesehen ist, welcher derart ausgelegt wird, daß er ein Moment auf die Leitradwelle 15 überträgt, wenn sich das Leitrad in umgekehrter Richtung, d.h. in entgegengesetzter Drehrichtung zum Turbinenrad T dreht und welcher leerläuft, wenn das Leitrad L in normaler Richtung, d.h. in gleicher Rotationsrichtung wie das Turbinenrad T, rotiert. Das Leitrad L des hydrodynamischen Wandlers 3 wirkt somit auf die Leitradwelle 15, welche mit dem ersten Planetenradsatz 7 gekoppelt ist und erhöht dadurch das Abtriebsmoment des Wandlers. Mit größer werdender Turbinendrehzahl des hydrodynamischen Drehzahl-/Drehmomentenwandlers nimmt dabei auch die Drehzahl des Leitrades L in entgegengesetzter Richtung zu. Dies führt in Verbindung mit den sich anschließenden Planetenradsätzen 7 und 8 zu einer Erhöhung der Anfahrwandlung und einer Verbesserung des Wirkungsgrades im Anfahrbereich.

Das Pumpenrad P ist mit einer Pumpenradwelle 19 drehfest verbunden, welche über ein Lager im Gehäuse 11 drehbar gelagert ist.

Zur Realisierung der einzelnen Gangstufen und Auslegung der einzelnen Gänge sind den einzelnen Elementen des hydrodynamisch-mechanischen Verbundgetriebes 1 Schaltelemente zugeordnet. Zwischen dem hydrodynamischen Getriebeteil 2 und dem mechanischen Getriebeteil 4 sind eine erste Kupplungseinrichtung K1 und eine erste Bremseinrichtung B1 vorgesehen.

Das Turbinenrad T und die mit diesem drehfest koppelbare Turbinenradwelle 13 ist mit dem Sonnenrad 8.1 des zweiten Planetenradsatzes 8 des mechanischen Drehzahl-/Drehmomentenwandlers 5 gekoppelt. Vorzugsweise sind das Turbinenrad T und das Sonnenrad 8.1 des zweiten Planetenradsatzes 8 auf einer gemeinsamen Welle, hier der Turbinenradwelle 13, angeordnet. die Turbinenradwelle 13 trägt dabei auch die Kupplungsscheibe 20 der ersten Kupplung K1. Die erste Kupplung K1 weist des weiteren eine Kupplungsscheibe 21 auf, welche mit der Leitradwelle 15 gekoppelt ist. Des weiteren ist das Leitrad L über die Leitradwelle 15 mit dem Sonnenrad 7.1 des ersten Planetenradsatzes 7 des mechanischen Drehzahl-/Drehmomentenwandlers 5 verbindbar. Die Leitradwelle 15 ist als Hohlwelle ausgeführt, welche die Turbinenradwelle 13 in Umfangsrichtung umschließt.

Mit der Kupplungsscheibe 21 der ersten Kupplung K1 ist ein vorzugsweise scheibenförmiges Element 22 verbunden und bildet mit dieser eine bauliche Einheit, an deren äußerem Umfangsbereich 23 die erste Bremseinrichtung B1 angreifen kann. Die erste Bremseinrichtung B1 dient dabei zum Festsetzen des Leitrades L über die Leitradwelle 15 und/oder des ersten Sonnenrades 7.1 des ersten Planetenradsatzes 7 des mechanischen Drehzahl-/Drehmomentenwandlers 5. Weitere Schaltelemente, hier die Schaltelemente in Form von Bremseinrichtungen B2 und B3, sind den einzelnen Planetenradsätzen 7 bzw. 8 des mechanischen Drehzahl-/Drehmomentenwandlers 5 zugeordnet. Im dargestellten Fall ist das zweite Bremselement B2 dem Hohlrad 7.3 des ersten Planetenradsatzes 7 und das dritte Bremselement B3 dem Hohlrad 8.3 des zweiten Planetenradsatzes 8 des mechanischen Drehzahl-/Drehmomentenwandlers 5 zugeordnet. Die Kopplung des mechanischen Drehzahl-/Drehmomentenwandlers 5 mit der Getriebeeingangswelle E über den hydrodynamischen Drehzahl-/Drehmomentenwandler 3 bzw. dessen Überbrückung über die Überbrückungskupplung 14 erfolgt dabei durch Kopplung des Turbinenrades T bzw. der Turbinenradwelle 13 mit einem ersten Getriebeelement des mechanischen Drehzahl-/Drehmomentenwandlers 5 und des Leitrades L mit einem weiteren zweiten Getriebeelement des mechanischen Drehzahl-/Drehmomentenwandlers 5. Als erstes Getriebeelement des mechanischen Drehzahl-/Drehmomentenwandlers 5 fungiert hier das Sonnenrad 8.1 des zweiten Planetenradsatzes 8. Als zweites Getriebeelement fungiert das Sonnenrad 7.1 des ersten Planetenradsatzes 7. Die mit den beiden Sonnenrädern 7.1 bzw. 8.1 gekoppelten Wellen, hier die Leitradwelle 15 und die Turbinenradwelle 13, fungieren als Eingangswellen des mechanischen Drehzahl-/Drehmomentenwandlers 5. Ein weiteres drittes Getriebeelement ist über den Gruppensatz 6 mit der Getriebeausgangswelle A verbunden. Als drittes Getriebeelement fungiert der Planetenträger 9, welcher von beiden Planetenradsätzen 7 und 8 gemeinsam genutzt wird. Das dritte Getriebeelement des mechanischen Drehzahl-/Drehmomentenwandlers 5 ist mit dem Eingang, welcher von einem ersten Getriebeelement des Gruppensatzes 6 gebildet wird, verbunden. Vorzugsweise wird diese Verbindung über eine drehfeste Kopplung vom dritten Getriebeelement des mechanischen Drehzahl-/Drehmomentenwandlers 5 und ersten Getriebeelement des Gruppensatzes 6 realisiert. Beide sind vorzugsweise auf einer gemeinsamen Verbindungswelle 24 angeordnet. Das erste Getriebeelement des Gruppensatzes 6 wird von dessen Planetenträger 10.4 gebildet. Ein zweites Getriebeelement des Gruppensatzes 6 ist drehfest mit der Getriebeausgangswelle A des hydrodynamisch-mechanischen Verbundgetriebes 1 verbunden. Als zweites Getriebeelement fungiert im dargestellten Fall das Hohlrad 10.3 des Planetenradsatzes 10 des Gruppensatzes 6. Während der mechanische Drehzahl-/Drehmomentenwandler 5 in Kombination mit dem hydrodynamischen Drehzahl-/Drehmomentenwandler 3 der Realisierung von drei Gangstufen dient, können durch Kombination des hydrodynamischen Drehzahl-/Drehmomentenwandlers 3, des mechanischen Drehzahl-/Drehmomentenwandlers 5 mit dem Gruppensatz 6 im dargestellten Fall sechs Gangstufen realisiert werden. Zu diesem Zweck sind dem Gruppensatz 6 jeweils eine weitere Kupplungseinrichtung, hier die zweite Kupplungseinrichtung K2 und eine weitere Bremseinrichtung, hier die vierte Bremseinrichtung B4, zugeordnet. Das vierte Bremselement dient dabei der Feststellung des Sonnenrades 10.1 des Gruppensatzes 6. Die zweite Kupplungseinrichtung K2 ermöglicht die starre Kopplung zwischen dem Planetenträger 10.4 und dem Sonnenrad 10.1 des Planetenradsatzes 10 des Gruppensatzes 6.

Des weiteren ist im Getriebe 1 ein hydrodynamischer Retarder R vorgesehen, welcher wenigstens mittelbar auf die Getriebeausgangswelle A wirkt. Der hydrodynamische Retarder R ist dabei räumlich betrachtet zwischen dem hydrodynamischen Drehzahl-/Drehmomentenwandler 3 und dem mechanischen Drehzahl-/Drehmomentenwandler 5 angeordnet. Der hydrodynamische Retarder R wirkt dabei über den mechanischen Drehzahl-/Drehmomentenwandler 5 und den Nachschaltsatz 6 auf die Getriebeausgangswelle A. Die Integration des hydrodynamischen Retarders R in räumlicher Nähe zum hydrodynamischen Drehzahl-/Drehmomentenwandler 3 ermöglicht es, beiden hydrodynamischen Komponenten ein gemeinsames Betriebsmittelversorgungssystem zuzuordnen, was zu einer erheblichen Minimierung des Aufwandes bezüglich der Bereitstellung der hydraulischen Kreisläufe führt. Insbesondere besteht die Möglichkeit, Bauraum, welcher ansonsten für die Realisierung der einzelnen Leitungsverbindungen erforderlich war, für andere Komponenten bereitzustellen.

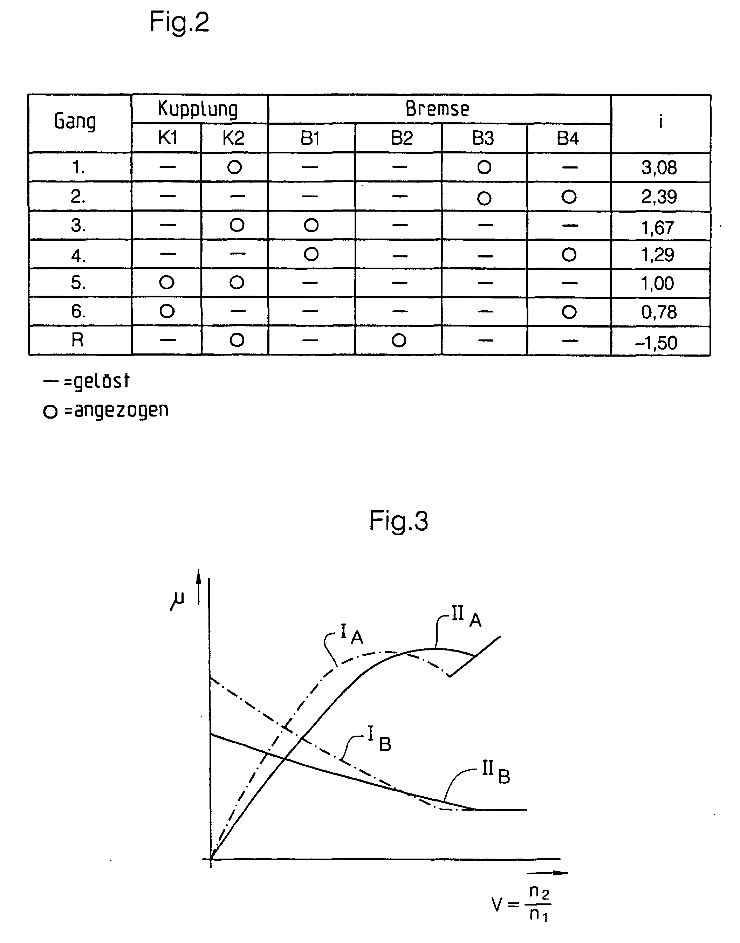

Die Figur 2 verdeutlicht anhand eines Schaltschemas eine mögliche Funktionsweise des in der Figur 1 beschriebenen Getriebes.

In der ersten Gangstufe ist das dritte Bremselement B3 betätigt, während die anderen Bremselemente und Kupplungen im mechanischen Drehzahl-/Drehmomentenwandler 5, das zweite Bremselement B2, das erste Bremselement B1 sowie das erste Kupplungselement K1 nicht betätigt bzw. ausgerückt sind. Somit ist nur das Hohlrad 8.3 des zweiten Planetenradsatzes am Gehäuse 11 festgestellt, während die anderen Planetenradsätze des mechanischen Drehzahl-/Drehmomentenwandlers 5 miteinander kämmen und eine Einheit bilden. Das Leitrad L wirkt in dem durch den Betriebsmodus der ersten Gangstufe gesteuerten Niedriggang-Geschwindigkeitsbereich reversierend über den Drehzahl-/Drehmomentenwandlers 5 auf den Steg und verstärkt das Abtriebsmoment. Im Gruppensatz 6 ist in dieser Gangstufe die erste Kupplungseinrichtung K2 betätigt. Diese ermöglicht es, daß das Hohlrad 10.3 mit der gleichen Drehzahl wie der Steg 10.4 angetrieben wird, d. h. im Ergebnis eine Übersetzung im Gruppenschaltsatz von 1 erzielt wird. Die Umschaltung in die zweite Gangstufe erfolgt durch Lösen der zweiten Kupplungseinrichtung K2 und Betätigung der vierten Bremseinrichtung B4. Bei Ansteigen des Geschwindigkeitsverhältnisses wird durch eine automatische Steuerung auf die dritte Gangstufe umgeschaltet. In diesem Fall wird das dritte Bremselement außer Betrieb genommen und das erste Bremselement B1 betätigt. Des weiteren sind die erste Kupplungseinrichtung K1 sowie das vierte Bremselement B4 außer Betrieb und die zweite Kupplungseinrichtung K2 betätigt. Die Leitradwelle 15 sowie das Sonnenrad 7.1 des ersten Planetenradsatzes des mechanischen Drehzahl-/Drehmomentenwandlers 5 werden somit gegenüber dem Gehäuse 11 festgestellt. Falls ohne Wandlerüberbrückungskupplung gefahren wird, ergeben sich wie im ersten Gang sehr hohe Zugkräfte, da das Leitraddrehmoment sich als Antriebsmoment über den Steg des Planetenradsatzes auswirkt. Die Drehmomente des hydrodynamischen Drehzahl-/Drehmomentenwandlers 3 entwickeln somit höhere Zugkräfte im ersten und zweiten Gang. Die Leistungsübertragung vom mechanischen Drehzahl-/Drehmomentenwandier 5 erfolgt durch weitere Drehzahl-/Drehmomentenwandlung über den Gruppensatz 6 auf die Abtriebswelle A des mechanischen-hydrodynamischen Verbundgetriebes 1. Die Umschaltung in die vierte Gangstufe erfolgt durch Lösen der vierten Bremseinrichtung B4 und Betätigung der zweiten Kupplungseinrichtung K2. Die Schalteinrichtungen im Grundgetriebe bleiben analog wie in der dritten Gangstufe betätigt. Bei weiterer Vergrößerung des Geschwindigkeitsverhältnisses wird in die fünfte Gangstufe gewechselt. In der fünften Gangstufe sind dabei jeweils nur die erste Kupplungseinrichtung und die zweite Kupplungseinrichtung K1 bzw. K2 betätigt. Die Turbinenradwelle 13 dreht sich in diesem Fall analog in der gleichen Richtung wie die Leitradwelle 15. In der sechsten Gangstufe sind die zweite Kupplungseinrichtung K2 gelöst und die vierte Bremseinrichtung betätigt. Die Leistung wird in Gang 6 direkt von der Getriebeeingangswelle E auf die Turbinenradwelle 13 und damit auf den mechanischen Drehzahl-/Drehmomentenwandler 5 übertragen.

In der Regel erfolgt bei Vergrößerung des Geschwindigkeitsverhältnisses die Überbrückung des hydrodynamischen Drehzahl-/Drehmomentenwandlers 3 mittels der Überbrückungskupplung 14. Die Leistung wird dann direkt von der Getriebeeingangswelle E auf die Turbinenradwelle 13 und damit auf den mechanischen Drehzahl-/Drehmomentenwandler 5 übertragen. Der hydrodynamische Drehzahl-/Drehmomentenwandler kommt somit nur im 1. und 2. Gang zum Einsatz.

Die drei Grundgangstufen werden somit durch den Gruppensatz 6 in jeweils zwei Teilgangstufen aufgesplittet, so daß letztendlich ein Mehrganggetriebe entsteht, im dargestellten Fall ein Sechsganggetriebe. Im einzelnen wird dies durch die wechselweise Betätigung der Schalteinrichtungen am Gruppensatz 6 realisiert. In der jeweils ersten der beiden Teilgangstufen wird die vom mechanischen Drehzahl-/Drehmomentenwandler 5 an dessen Abtriebswelle anliegende Leistung mit einem Übersetzungsverhältnis von 1 auf die Getriebeausgangswelle A übertragen. In der zweiten Teilgangstufe, welche jeweils auf die erste Teilgangsstufe folgt, erfolgt eine Übersetzung von der an dem Ausgang des mechanischen Drehzahl-/Drehmomentenwandlers 5 anliegenden Drehzahl über den Gruppensatz 6 ins Schnelle.

Die Figur 3 verdeutlicht anhand eines Diagrammes das Übertragungsverhalten eines erfindungsgemäß gestalteten hydrodynamisch-mechanischen Verbundgetriebes 1 gegenüber einem Getriebe mit einem hydrodynamischen Drehzahl-/Drehmomentwandler mit zwei Leiträdern im Anfahrbereich. Dazu sind der Wirkungsgrad und die Wandlung über dem Drehzahlverhältnis in einem Diagramm aufgetragen. Die entsprechenden Kennlinien für einen einstufigen zweiphasigen hydrodynamischen Wandler, der erfindungsgemäß in der Getriebebaueinheit zur Anwendung gelangt, sind dabei für den Wirkungsgrad mit I_{A} und für die Wandlung mit l_{B} bezeichnet, während die Kennlinien für die Wandlung und den Wirkungsgrad für ein konventionell gestaltetes Getriebe in Form des gattungsgemäßen Getriebes mit II_{A} bzw. II_{B} gekennzeichnet. Daraus wird ersichtlich, daß in Zusammenarbeit mit dem mechanischen Getriebeteil mit der erfindungsgemäßen Lösung eine bessere Anfahrwandlung und ein besserer Wirkungsgrad erzielt werden.

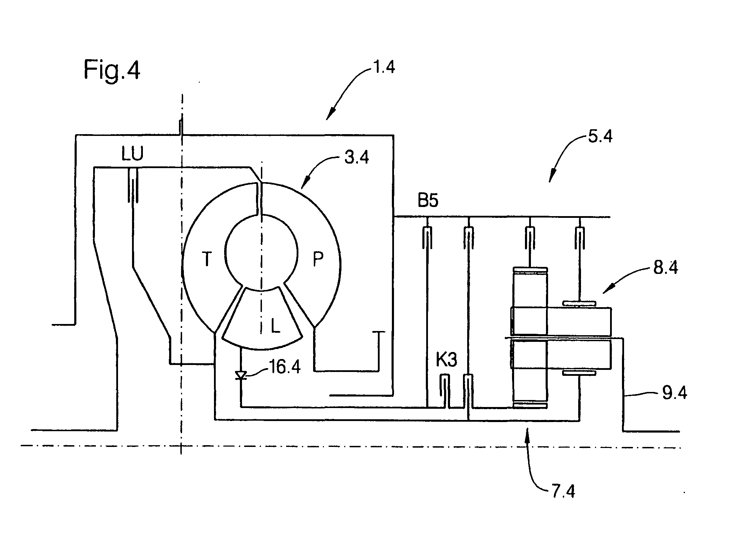

Figur 4 verdeutlicht anhand eines Ausschnittes eine weitere Ausführung eines Getriebes 1.4. Dargestellt sind hier lediglich der erste hydrodynamische Getriebeteil 2.4 und die, einen gemeinsamen Steg 9.4 aufweisenden Planetenradsätze 7.4 und 8.4 des mechanischen Drehzahl-/Drehmomentenwandlers 5.4 des zweiten mechanischen Getriebeteiles 4.4. Der Nachschaltsatz ist nicht wiedergegeben. Der Grundaufbau des hydrodynamischen Drehzahl-/Drehmomentenwandlers 3.4 und des Drehzahl-/Drehmomentenwandlers 5.4 entspricht dem in der Figur 1 beschriebenen, weshalb für gleiche Elemente gleiche Bezugszeichen verwendet werden. Die Kopplung des ersten Elementes 8.41 des zweiten Planetenradsatzes 8.4 mit dem Turbinenrad T des hydrodynamischen Drehzahl-/Drehmomentenwandlers 3.4 erfolgt direkt, d.h. ohne Zwischenshaltung weiterer Drehzahl-/Drehmomentenwandlungseinrichtungen. Zur Realisierung einer Mehrgängigkeit ist der Abtrieb des mechanischen Drehzahl-/Drehmomentenwandlers 5.4, welcher vom gemeinsam genutzten Steg 9.4 gebildet wird, mit einem, hier nicht dargestellten Nachschaltsatz 10 gekoppelt. Auch hier ist der hydrodynamischen Drehzahl-/Drehmomentenwandler 3.4 einstufig und zweiphasig ausgeführt. D.H. der hydrodynamische Drehzahl-/Drehmomentenwandler 3.4 ist als Trilokwandler mit einem Pumpenrad P, einem Turbinenrad T und einem zwischen Pumpenrad P und Turbinenrad T angeordneten Leitrad L ausgeführt. Aufgrund er Kopplung des Leitrades L mit einem Getriebeelement des ersten Planetenradsatzes 7.4, insbesondere dem Sonnenrad 7.41 des ersten Planetenradsatzes 7.4 wird das Leitrad L bei Nichtnutzung des Freilaufes 16.6 entgegengesetzt zur Drehrichtung von Pumpen- und Turbinenrad angetrieben. Dem Leitrad L sind hier zusätzlich eine Bremseinrichtung B5 und eine Kupplungsenrichtung K3 zugeordnet. Die Betätigung dieser Elemente bietet den Vorteil einer wahlweisen Entkopplung des Leitrades vom mechanischen Drehzahl-/Drehmomentenwandier 5.4 und der Abstützung am Gehäuse.

## Patentansprüche

1. Hydrodynamisch-mechanisches Mehrgangverbundgetriebe
1.1 mit einer Getriebeeingangswelle (E) und einem Abtrieb (A);
1.2 mit einem hydrodynamischen Getriebeteil (2), umfassend einen hydrodynamischen Drehzahl-/Drehmomentenwandler (3) und einem, diesem räumlich bezogen auf die Getriebeeingangswelle nachgeordneten mechanischen Getriebeteil (4), umfassend wenigstens einen mechanischen Drehzahl/Drehmomentenwander (5);
1.3 der mechanische Drehzaht-/Drehmomentenwandler (5) umfaßt wenigstens zwei Planetenradsätze - einen ersten Planetenradsatz (7) und einen zweiten Planetenradsatz (8) -, umfassend jeweils wenigstens ein Sonnenrad (7.1,8.1), ein Hohlrad (7.3,8.3), Planetenräder (7.2,8.2) und einen Steg (9), wobei die Planetenradsätze (7,8) derart ausgeführt und angeordnet sind, daß
1.3.1 jeweils ein Element des ersten Planetenradsatzes (7) und des zweiten Planetenradsatzes (8) wenigstens mittelbar mit der Getriebeeingangswelle (E) oder einem Element des hydrodynamischen Drehzahl-/Drehmomentenwandlers (3) koppelbar ist wobei das Turbinenrad (T) des hydrodynamischen Drehzahl-/Drehmomentwandlers (5) mit dem zweiten Planetenradsatz (8) direkt drehfest verbunden ist; und
1.3.2 jeweils ein weiteres zweites Element des ersten Planetenradsatzes (7) mit einem weiteren zweiten Element des zweiten Planetenradsatzes (8) drehfest gekoppelt ist und diese Kopplung den Abtrieb des mechanischen Drehzahl-/Drehmomentenwandlers bildet, wobei das zweite Element des ersten Planetenradsatzes (7) und das zweite Element des zweiten Planetenradsatzes (8) jeweils vom Steg (9) gebildet werden;
1.4 der hydrodynamische Drehzahl-/Drehmomentenwandler (3) ist einstufig und zweiphasig ausgeführt;
1.5 das Leitrad des hydrodynamischen Drehzahl-/Drehmomentenwandlers (3) ist mit dem ersten Planetenradsatz (7) des mechanischen Drehzahl-/Drehmomentenwandlers (5) über einen Freilauf (16) gekoppelt; **gekennzeichnet durch** die folgenden Merkmale:
1.6 mit einer Überbrückungskupplung (14) zwischen Turbinenrad (T) und Getriebeeinganspwellei
1.7 der mechanische Getriebeteil (4), umfaßt eine mechanische Drehzahl-/Drehmomentenwandlung (6) slimichtung, die mit dem Ausgang des mechanischen Drehzahl-/Drehmomentenwandlers (5) gekoppelt ist und deren Ausgang den Abtrieb (A) des hydrodynamisch-mechanischen Mehrgangverbundgetriebes bildet;
1.8 es sind Mittel zur wahlweisen Kopplung des ersten Elementes (7.1) des ersten Planetenradsatzes (7) mit dem ersten Element (8.1) des zweiten Planetenradsatzes (8) und damit jeweils der drehfesten Verbindung der Kopplungen des ersten Elementes des ersten und zweiten Planetenradsatzes mit dem hydrodynamischen Drehzaht-/Drehmomentenwandter(3) vorgesehen, umfassend eine Kupplungseinrichtung (K1).

2. Hydrodynamisch-mechanisches Mehrgangverbundgetriebe nach Anspruch 1, **dadurch gekennzeichnet, daß** das erste Element des ersten Planetenradsatzes (7) vom Sonnenrad (7.1) des ersten Planetenradsatzes (7) und das erste Element des zweiten Planetenradsatzes (8) vom Sonnenrad (8.1) des zweiten Planetenradsatres (8) gebildet werden.

3. Hydrodynamisch-mechanisches Mehrgangverbundgetriebe nach Ansprüche einem der 1 oder 2 **dadurch gekennzeichnet, daß** die mechanische Drehzahl-/Drehmomentenwandlungseinrichtung (6) als Gruppensatz für den mechanischen Drehzahl-/Drehmomentenwandler (5) ausgeführt ist und permanent oder zuschaltbar betreibbar ist.

4. Hydrodynamisch-mechanisches Mehrgangverbundgetriebe nach Anspruch 3, **dadurch gekennzeichnet, daß** die Drehzahl-/Drehmomentenwandlungseinrichtung (6) wenigstens einen Planetenradsatz (10), umfassend ein Sonnenrad (10.1), ein Hohlrad, (10.3) Planetenräder (10.2) und einen Steg (10.4), aufweist.

5. Hydrodynamisch-mechanisches Mehrgangverbundgetriebe nach einem der Ansprüche 1 bis 4, **dadurch gekennzeichnet, daß** Mittel zur wahlweisen Kopplung des ersten Elementes des zweiten Planetenradsatzes (8) an die Getriebeeingangswelle (E) vorgesehen sind.

6. Hydrodynamisch-mechanisches Mehrgangverbundgetriebe nach Anspruch 5, **dadurch gekennzeichnet, daß** die Mittel zur wahlweisen Kopplung eine schaltbare Kupplungseinrichtung (14) umfassen.

7. Hydrodynamisch-mechanisches Mehrgangverbundgetriebe nach einem der Ansprüche 1 bis 5, **dadurch gekennzeichnet, daß** dem mechanischen Drehzahl-/Drehmomentenwandler (5) eine Vielzahl von Schalteinrichtungen (B1, B2, B3, K1) in Form von Kupplungen und/oder Bremseinrichtungen zugeordnet sind.

8. Hydrodynamisch-mechanisches Mehrgangverbundgetriebe nach Anspruch 7, **dadurch gekennzeichnet, daß** das erste Element des ersten Planetenradsatzes (7) mittels einer ersten Bremseinrichtung (B1) feststellbar ist

9. Hydrodynamisch-mechanisches Mehrgangverbundgetriebe nach einem der Ansprüche 7 oder 8, **dadurch gekennzeichnet, daß** ein drittes Element (7.3) des ersten Planetenradsatzes (7) mittels einer zweiten Bremseinrichtung (B2) festsetzbar ist.

10. Hydrodynamisch-mechanisches Mehrgangverbundgetriebe nach einem der Ansprüche 7 bis 9, **dadurch gekennzeichnet, daß** ein drittes Element (8.3) des zweiten Planetenradsatzes (8) mittels einer dritten Bremseinrichtung (B3) feststellbar ist

11. Hydrodynamisch-mechanisches Mehrgangverbundgetriebe nach einem des Ansprüche 1 bis 10, **gekennzeichnet durch** die folgenden Merkmale:
11.1 dem Planetenradsatz (10) der ersten Drehzahl-/drehmomentenwandlungseinrichtung (6) ist jeweils eine weitere vierte Bremseinrichtung (B4) und eine weitere zweite Kupplungseinrichtung (K2) zugeordnet;
11.2 die vierte Bremseinrichtung (B4) ist mit dem Sonnenrad (10.1, 34.1) des Planetenradsatzes (10) koppelbar,
11.3 die zweite Kupplungseinrichtung (K2) dient der Kopplung des Sonnenrades (10.1) mit dem Planetenträger (10.4) des Planetenradsatzes (10).

## Claims

1. Hydrodynamic-mechanical multi-speed compound transmission
1.1 comprising a transmission input shaft (E) and an output (A);
1.2 comprising a hydrodynamic transmission part (2) comprising a hydrodynamic speed/torque converter (3) and a mechanical transmission part (4) connected after said hydrodynamic speed/torque converter (3) relative to the transmission input shaft, said mechanical transmission part comprising at least one mechanical speed/torque converter (5);
1.3 the mechanical speed/torque converter (5) comprises at least two planetary gear trains - a first planetary gear train (7) and a second planetary gear train (8) - each comprising at least a sun gear (7.1, 8.1), an annulus (7.3, 8.3), planetary gears (7.2, 8.2) and a web (9), the planetary gear trains (7, 8) being configured and arranged such that
1.3.1 one element of the first planetary gear train (7) and the second planetary gear train (8) respectively may be optionally linked at least indirectly to the transmission input shaft (E) or to an element of the hydrodynamic speed/torque converter (3), the turbine wheel (T) of the hydrodynamic speed/torque converter (5) being directly connected to the second planetary gear train (8) in a rotationally engaged manner; and
1.3.2 a further second element of the first planetary gear train (7) is respectively linked in a rotationally engaged manner to a further second element of the second planetary gear train (8) and this link forms the output of the mechanical speed/torque converter, the second element of the first planetary gear train (7) and the second element of the second planetary gear train (8) being respectively formed by the web (9);
1.4 the hydrodynamic speed/torque converter (3) has a single stage and two phases;
1.5 the stator of the hydrodynamic speed/torque converter is linked to the first planetary gear train (7) of the mechanical speed/torque converter (5) via a free-wheel (16), **characterised by** the following features:
1.6 comprising a lockup clutch (14) between the turbine wheel (T) and the transmission input shaft;
1.7 the mechanical transmission part (4) comprises a mechanical speed/torque converter mechanism (6) which is linked to the outlet of the mechanical speed/torque converter (5) and the outlet of which forms the output (A) of the hydrodynamic-mechanical multi-speed compound transmission;
1.8 means are provided for optionally linking the first element (7.1) of the first planetary gear train (7) to the first element (8.1) of the second planetary gear train (8) and thus for linking the rotationally engaged connection of the links of the first element of the first and second planetary gear train to the hydrodynamic speed/torque converter (3), comprising a clutch mechanism (K1).

2. Hydrodynamic-mechanical multi-speed compound transmission according to claim 1, **characterised in that** the first element of the first planetary gear train (7) is formed by the sun gear (7.1) of the first planetary gear train (7) and the first element of the second planetary gear train (8) is formed by the sun gear (8.1) of the second planetary gear train (8).

3. Hydrodynamic-mechanical multi-speed compound transmission according to either claim 1 or claim 2, **characterised in that** mechanical speed/torque converter mechanism (6) is configured as a group train for the mechanical speed/torque converter (5) and may be operated continuously or added.

4. Hydrodynamic-mechanical multi-speed compound transmission according to claim 3, **characterised in that** the speed/torque converter mechanism (6) comprises at least one planetary gear train (10), comprising a sun gear (10.1), an annulus (10.3), planetary gears (10.2) and a web (10.4).

5. Hydrodynamic-mechanical multi-speed compound transmission according to any one of claims 1 to 4, **characterised in that** means are provided for optionally linking the first element of the second planetary gear train (8) to the transmission input shaft (E).

6. Hydrodynamic-mechanical multi-speed compound transmission according to claim 5, **characterised in that** the means for the optional linking comprise a clutch mechanism (14) which may be shifted.

7. Hydrodynamic-mechanical multi-speed compound transmission according to any one of claims 1 to 5, **characterised in that** a large number of shifting mechanisms (B1, B2, B3, K1) in the form of clutches and/or brake mechanisms are associated with the mechanical speed/torque converter (5).

8. Hydrodynamic-mechanical multi-speed compound transmission according to claim 7, **characterised in that** the first element of the first planetary gear train (7) may be locked by means of a first brake mechanism (B1).

9. Hydrodynamic-mechanical multi-speed compound transmission according to either claim 7 or claim 8, **characterised in that** a third element (7.3) of the first planetary gear train (7) may be locked by means of a second brake mechanism (B2).

10. Hydrodynamic-mechanical multi-speed compound transmission according to any one of claims 7 to 9, **characterised in that** a third element (8.3) of the second planetary gear train (8) may be locked by means of a third brake mechanism (B3).

11. Hydrodynamic-mechanical multi-speed compound transmission according to any one of claims 1 to 10, **characterised by** the following features:
11.1 a further fourth brake mechanism (B4) and a further second clutch mechanism (K2) are associated with the planetary gear train (10) of the first speed/torque converter mechanism (6);
11.2 the fourth brake mechanism (B4) may be linked to the sun gear (10.1, 34.1) of the planetary gear train (10);
11.3 the second clutch mechanism (K2) serves to link the sun gear (10.1) to the planet carrier (10.4) of the planetary gear train (10).

## Revendications

1. Boîte de vitesses bimodale à plusieurs vitesses hydrodynamique et mécanique comprenant :
1.1 avec un arbre d'entrée de boîte de vitesses (E) et un entraînement (A) ;
1.2 une partie de boîte de vitesses hydrodynamique (2), comprenant un convertisseur hydrodynamique nombre de tours / couple (3) et une partie de boîte de vitesses mécanique (4) disposée spatialement en aval sur l'arbre d'entrée de boîte de vitesses par rapport à celle-ci, comprenant au moins un convertisseur mécanique nombre de tours / couple (5) ;
1.3 le convertisseur mécanique nombre de tours / couple (5) comprenant au moins deux trains de pignons planétaires -un premier train de pignons planétaires (7) et un deuxième train de pignons planétaires (8)- , comprenant respectivement au moins une roue solaire (7.1, 8.1), une roue à denture intérieure (7.3, 8.3), des pignons planétaires (7.2, 8.2) et une entretoise (9), les trains de pignons planétaires (7, 8) étant configurés et disposés de manière à ce que :
1.3.1 respectivement, un élément du premier train de pignons planétaires (7) et du deuxième train de pignons planétaires (8) puisse être couplé au moins indirectement à l'arbre d'entrée de boîte de vitesses (E) ou à un élément du convertisseur hydrodynamique nombre de tours / couple (3), la roue de turbine (T) du convertisseur hydrodynamique nombre de tours / couple (5) étant reliée directement et fixement sans rotation au deuxième train de pignons planétaires (8) ;
1.3.2 respectivement, un deuxième élément supplémentaire du premier train de pignons planétaires (7) soit couplé fixement sans rotation à un deuxième élément supplémentaire du deuxième train de pignons planétaires (8) et que ce couplage forme l'entraînement du convertisseur mécanique nombre de tours / couple, le deuxième élément du premier train de pignons planétaires (7) et le deuxième élément du deuxième train de pignons planétaires (8) étant respectivement formés par l'entretoise (9) ;
1.4 le convertisseur hydrodynamique nombre de tours / couple (3) étant à démultiplication simple et diphasique ;
1.5 la roue directrice du convertisseur hydrodynamique nombre de tours / couple (3) étant couplée au premier train de pignons planétaires (7) du convertisseur mécanique nombre de tours / couple (5) via une roue libre (16) ;
**caractérisée par** les caractéristiques suivantes :
1.6 un embrayage de pontage (14) entre la roue de turbine (T) et l'arbre,
1.7 la partie mécanique de la boîte de vitesses (4) comprend un dispositif de conversion mécanique nombre de tours / couple (6) qui est couplé à la sortie du convertisseur mécanique nombre de tours / couple (5) et dont la sortie forme l'entraînement (A) de la boîte de vitesses bimodale à plusieurs vitesses hydrodynamique et mécanique ;
1.8 des moyens sont prévus pour le couplage facultatif du premier élément (7.1) du premier train de pignons planétaires (7) au premier élément (8.1) du deuxième train de pignons planétaires (8) et ainsi respectivement de la liaison fixe des couplages du premier élément du premier et du deuxième train de pignons planétaire au convertisseur hydrodynamique nombre de tours / couple (3), comprenant un dispositif de couplage (K1).

2. Boîte de vitesses bimodale à plusieurs vitesses hydrodynamique et mécanique selon la revendication 1, **caractérisée en ce qu'**elle comprend un premier élément du premier train de pignons planétaires (7) de la roue solaire (7.1) du premier train de pignons planétaires (7) et du premier élément du deuxième train de pignons planétaires (8) de la roue solaire (8.1) du deuxième train de pignons planétaires (8).

3. Boîte de vitesses bimodale à plusieurs vitesses hydrodynamique et mécanique selon l'une quelconque des revendications 1 ou 2, **caractérisée en ce que** le dispositif de conversion mécanique nombre de tours / couple (6) est configuré comme un jeu groupé de convertisseurs mécanique nombre de tours / couple (5) et qu'il peut être actionné soit de façon permanente soit lors de la mise sous tension.

4. Boîte de vitesses bimodale à plusieurs vitesses hydrodynamique et mécanique selon la revendication 3, **caractérisée en ce que** le dispositif de conversion mécanique nombre de tours / couple (6) présente au moins un train de pignons planétaires (10), comprenant une roue solaire (10.1), une roue à denture intérieure (10.3), des pignons planétaires (10.2) et une entretoise (10,4).

5. Boîte de vitesses bimodale à plusieurs vitesses hydrodynamique et mécanique selon l'une quelconque des revendications 1 à 4, **caractérisée en ce que** l'on prévoit des moyens de couplage facultatif du premier élément du deuxième train de pignons planétaires (8) à l'arbre d'entrée de boîte de vitesses (E).

6. Boîte de vitesses bimodale à plusieurs vitesses hydrodynamique et mécanique selon la revendication 5, **caractérisée en ce que** les moyens de couplage facultatif comprennent un dispositif d'embrayage (14) commutable.

7. Boîte de vitesses bimodale à plusieurs vitesses hydrodynamique et mécanique selon l'une quelconque des revendications 1 à 5, **caractérisée en ce qu'**une pluralité de mécanismes de couplage (B1, B2, B3, K1) prenant la forme d'embrayages et/ou de dispositifs de freinage sont associés au convertisseur nombre de tours / couple (5).

8. Boîte de vitesses bimodale à plusieurs vitesses hydrodynamique et mécanique selon la revendication 7, **caractérisée en ce que** le premier élément du premier train de pignons planétaires (7) peut être bloqué au moyen d'un premier dispositif de freinage (B1).

9. Boîte de vitesses bimodale à plusieurs vitesses hydrodynamique et mécanique selon l'une quelconque des revendications 7 ou 8, **caractérisée en ce qu'**un troisième élément (7.3) du premier train de pignons planétaires (7) peut être bloqué au moyen d'un deuxième dispositif de freinage (B2).

10. Boîte de vitesses bimodale à plusieurs vitesses hydrodynamique et mécanique selon l'une quelconque des revendications 7 à 9, **caractérisée en ce qu'**un troisième élément (8.3) du deuxième train de pignons planétaires (8) peut être bloqué au moyen d'un troisième dispositif de freinage (B3).

11. Boîte de vitesses bimodale à plusieurs vitesses hydrodynamique et mécanique selon l'une quelconque des revendications 1 à 10, **caractérisée par** les caractéristiques suivantes :
11.1 le train de pignons planétaires (10) du premier dispositif de conversion nombre de tours / couple (6) est respectivement associé à un quatrième dispositif de freinage (B4) supplémentaire et à un deuxième dispositif de couplage (K2) supplémentaire ;
11.2 le quatrième dispositif de freinage (B4) peut être couplé à la roue solaire (10.1, 34.1) du train de pignons planétaires (10) ;
11.3 le deuxième dispositif de couplage (K2) sert au couplage de la roue solaire (10.1) au porte-pignons (10.4) du train de pignons planétaires (10).
